# EUROPEAN PATENT SPECIFICATION

(11) **EP 2 208 371 B1**
(45) Date of publication and mention of the grant of the patent: **06.07.2011**
(21) Application number: 08850079.8
(22) Date of filing: 23.10.2008
(51) Int. Cl.: H04W 4/08, H04L 29/06

(54) **SECURE COMMUNICATION SYSTEM COMPRISING TERMINALS WITH DIFFERENT SECURITY CAPABILITY LEVELS**
SICHERES KOMMUNIKATIONSSYSTEM MIT ENDGERÄTEN MIT UNTERSCHIEDLICHEN SICHERHEITSLEISTUNGSSTUFEN
SYSTÈME DE COMMUNICATION SÉCURISÉ COMPORTANT DES TERMINAUX À DIFFÉRENTS NIVEAUX DE POSSIBILITÉ DE SÉCURITÉ

(30) Priority: 16.11.2007 GB 0722497
(43) Date of publication of application: 21.07.2010
(73) Proprietor: Motorola Solutions, Inc., Schaumburg IL 60196 (US)
(72) Inventor: KAEHLER, Morten,, DK-2800 Lyngby (DK); CHATER-LEA, David J.,, Crowthorne Berkshire RG45 6EX (GB); KRUEGEL, Chris A.,, Plainfield Illinois 60585 (US); PEDERSEN, Kristian Gronkjaer,, DK-3500 Vaerlose (DK)
(74) Representative: Treleven, Colin
(86) International application number: PCT/US2008/080944
(87) International publication number: WO 2009/064596

(56) References cited:
- EP-A- 1 324 541
- US-A1- 2003 012 149
- US-A1- 2006 031 586
- US-A1- 2007 055 891

## Description

### TECHNICAL FIELD

The technical field relates generally to a communication system, and a method and processor for use in the system. In particular, the technical field relates to a mobile communication system, and a method and processor for use in the system, in which communication terminals can have different security capability levels for sending or receiving encrypted communications to maintain security of user information communicated.

### BACKGROUND

Many communication systems employ a procedure to protect sensitive communicated information by encryption especially if the information is to be sent via insecure channels, e.g. by wireless signals or via the internet. End-to-end encryption may be employed. This means that the encryption can be applied by a sending terminal or source of the information and is removed by a receiving terminal or destination of the information. Encryption is usually achieved by producing a random or pseudorandom sequence of numbers (binary digits) and using an encryption algorithm to combine the sequence with a secret user number, referred to as an 'encryption key', applied by a user of the sending terminal. The combination generates another number sequence which is known as a keystream. The keystream, or a portion of it, is then combined with the user speech, data or other information to be transmitted to encrypt the information. This combination may use a known combining function such as an exclusive OR (XOR) combining function.

The encryption process has to be synchronised between the transmitter in the sending terminal and the receiver in the receiving terminal. The transmitter must send information concerning the state of the encryption algorithm to the receiver to allow the receiver to synchronise its algorithm for decryption. The receiving terminal must have the same encryption algorithm and the same encryption key as the transmitting terminal in order to decrypt the encrypted information it receives.

The system in which end-to-end encryption is employed may be a mobile communication system which is a cellular system. Such a system is one in which the user terminals include mobile stations, such as portable or vehicle carried telephones or radios, wireless enabled computing devices, personal digital assistants and the like, which can communicate via a network infrastructure. The infrastructure generally includes a plurality of base stations (base transceiver stations) which may be fixed in position and which may form a communication network. Each base station has one or more transceivers which serve mobile stations in a given region or area, known as a 'cell', by wireless communication. The cells of neighbouring base stations are often overlapping.

Communications to and from mobile stations in a cellular communication system include system control communications and traffic communications. System control communications are made to establish and maintain operation in the system in accordance with a pre-determined operating protocol. Traffic communications are made between user terminals, such as a mobile station and another terminal or a plurality of other terminals, which may include one or more mobile stations, to transmit user communicated information known as 'traffic' information; such information may include speech or data, e.g. numerical or text data, picture information or video information. A traffic communication between mobile stations which are currently in the same cell may be established by a single base station or even directly between the mobile stations without the involvement of a base station. Traffic communications between mobile stations which are currently in different cells may be established by involvement of a plurality of base stations serving the various cells.

An example of a cellular system is a TETRA system, which is a system operating according to the protocols defined by the TETRA operating standard defined by the European Telecommunications Standards Institute (ETSI). Such systems are widely used by (amongst others) emergency services organisations, such as police, fire brigades and ambulance services. In a TETRA system, wireless communications to and from mobile stations and other user terminals are controlled in a synchronised sequence of time slots. The duration of each time slot is 14.167 ms, for example. A set of four slots represent four physical channels in a time division multiple access (TDMA) protocol and form, for example, one time frame of duration 56.67ms in an 18 time frame multiframe timing structure. Each communication is generally made on a channel allocated by the system infrastructure. The channel may thus comprise a series of specified time slots, and the slots may be on a specified carrier frequency.

In communication systems, such as TETRA systems, traffic information may be communicated between a transmitting terminal and a plurality of receiving terminals. The terminals may be referred to as a 'group' (or 'talk group') which may have an assigned identifier within the system. Each user terminal, which may be a mobile or fixed terminal, operating within the system may be a member of one or more groups. Allocation of membership to groups may be carried out by an operator having control or management functions in operation of the system. For example, the operator may be a person operating a terminal comprising a control console (also known as a 'dispatcher console') who may be responsible for other management or control duties such as issuing group work assignments using the system. Such an operator is often referred to as a 'dispatcher'.

In use of communication systems, such as TETRA systems, it may be desirable to join or connect together different existing groups so that a traffic communication taking place in one group may be received by terminals of one or more other groups. For example, the different groups may be different police groups and the communication may be a call which should be heard by the members of the different police groups. The operation of joining or connecting groups together is known as 'patching'. Usually, patching is carried out by an operator, such as a dispatcher, using a communication terminal comprising a control console.

The user terminals operating in different groups in a communication system, such as a TETRA system, may have different security capabilities. For example, some terminals may be capable of communicating in a secure mode using end-to-end encryption. Other terminals may not be capable of using end-to-end encryption and may therefore communicate in a clear mode, in other words, a mode in which wireless communications are unencrypted. Where groups are to be patched together and the groups have different security capabilities and normally communicate in different modes, the patching process may be difficult to achieve and operational problems may result. In particular, it may be desirable to allow communications to be made as widely as possible to all members of a patched group, without degrading the security of communications by allowing encrypted communications to be retransmitted in a clear form.

Thus, there exists a need for a system, a method and a processor for use in communications, especially for use in mobile communications, which addresses at least some of the shortcomings of past and present systems, methods and processors for use in group communications.

US2003/012149 shows a wireless communications system. A communication manager creates a communication group, comprising devices that may be in different networks. See para [0435]. User data from a transmitting terminal may be encrypted. See para [0444].

### BRIEF DESCRIPTION OF THE ACCOMPANYING DRAWINGS

The accompanying drawings, in which like reference numerals refer to identical or functionally similar items throughout the separate views which, together with the detailed description below, are incorporated in and form part of this patent specification and serve to further illustrate various embodiments of concepts that include the claimed invention, and to explain various principles and advantages of those embodiments.
FIG. 1 is a block schematic diagram of an illustrative communication system 100 which may be adapted in accordance with embodiments of the invention.
FIG. 2 is a flow diagram of a method of operation embodying the invention in the system of FIG. 1.
FIG. 3 is a flow diagram of a further method of operation embodying the invention in the system of FIG. 1.

Skilled artisans will appreciate that items shown in the accompanying drawings are illustrated for simplicity and clarity and have not necessarily been drawn to scale. For example, the dimensions of some of the items may be exaggerated relative to other items to assist understanding of various embodiments. In addition, the description and drawings do not necessarily require the order illustrated. Apparatus and method components have been represented where appropriate by conventional symbols in the drawings, showing only those specific details that are pertinent to understanding the various embodiments so as not to obscure the disclosure with details that will be readily apparent to those of ordinary skill in the art having the benefit of the description herein. Thus, it will be appreciated that for simplicity and clarity of illustration, common and well-understood items that are useful or necessary in a commercially feasible embodiment may not be depicted in order to facilitate a less obstructed view of these various embodiments.

### DETAILED DESCRIPTION

Generally speaking, pursuant to the various embodiments of the invention to be described, there is provided an improved communication system, and a method and processor for use therein. The communication system includes a group management processor operable to divide an enlarged group of user terminals formed by patching of smaller groups into sub-sets of user terminals including: (1) at least one encrypted sub-set of terminals which are operable to undertake only encrypted communications; and (2) at least one selectable-clear sub-set of terminals which includes: (i) selectable terminals that are able to undertake clear communications and, when selected, encrypted communications; and (ii) clear terminals that are operable to undertake only clear communications; and a translator operable to translate a communication sent in a first encrypted form from a user terminal of one of the sub-sets into a second encrypted form suitable for decryption by user terminals of another of the sub-sets.

In the improved communication system, the translator may conveniently operate by translating an encrypted communication received in the first encrypted form into the second encrypted form by decrypting the communication of the first encrypted form and re-encrypting the decrypted communication into the second encrypted form. The first encrypted form and the second encrypted form may use at least one encryption parameter which differs between the first encrypted form and the second encrypted form. The at least one encryption parameter which differs may be selected from: (i) an encryption key; (ii) an encryption algorithm; (iii) a synchronisation parameter.

The system may include a group patching processor operable to patch together communication resources of smaller groups of user terminals to form the enlarged group of the terminals.

The functions of the group management processor and of the group patching processor may be operated in a combined processor or in separate processors. A combined processor or console may incorporate the function of the translator as well as the function of group management processor and optionally the group patching processor.

The improved system embodying the invention allows communications to be made as widely as possible to all members of an enlarged patched group, without degrading the security of communications by allowing encrypted communications to be retransmitted in a clear form.

The improved system allows efficient operation within a patched enlarged group including user terminals of smaller groups having different security capabilities. The operation may take place in a manner which is consistent in different operational scenarios. All user terminals, such as mobile stations operating in an enlarged group formed or connected together by patching, may receive a call taking place in the enlarged group irrespective of the security capability of the receiving terminal relative to that of the transmitting terminal provided that the security state of an encrypted call is not degraded to clear, if such degrading is not desired. Users of the terminals do not need to be aware that patching of resources of different capabilities has been carried out.

The improved system embodying the invention may suitably be a system in which end-to-end encrypted communications may take place by multicast transmission, such as a mobile cellular communication system or a wired network or the internet. Where the system is a mobile cellular communication system, it may for example be a TETRA system, i.e. a system which operates in accordance with the protocols defined by the TETRA standard, or an APCO 25 system, i.e. a system which operates in accordance with the protocols defined by the APCO Project 25 standard defined by the Association of Public-Safety Communications Officials-International, Inc.

Those skilled in the art will appreciate that these recognized advantages and other advantages described herein are merely illustrative and are not meant to be a complete rendering of all of the advantages of the various embodiments of the invention.

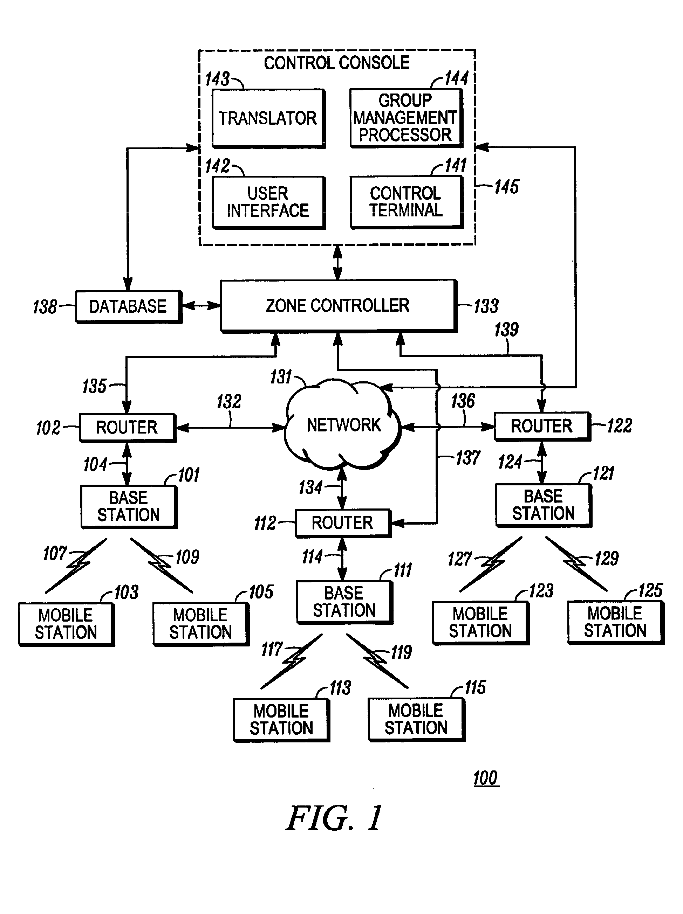

Referring now to the accompanying drawings, and in particular to FIG. 1, there is shown a block schematic diagram of a communication system 100 which may be adapted to operate in accordance with embodiments of the invention. The system 100 is a cellular communication system, for example. The system 100 includes a fixed infrastructure including a plurality of base stations (BSs) which serve with wireless communications mobile stations (MSs) in a cell defined by the position of each of the BSs. It will be apparent to those skilled in the art that the system 100 and the component operational units which are to be described as operating therein, particularly the BSs and the MSs, may take a number of known forms. Thus, the form of the system 100, and of its operational component units, to be described should be regarded as illustrative rather than limiting. The system 100 may be a TETRA system, i.e. may operate in accordance with the protocols defined by the TETRA standard, although it could alternatively be a system operating according to another industry standard for communications, e.g. wireless communications, in which multicast transmissions are possible, such as an APCO 25 system. The system 100 includes a BS 101 which provides wireless communication service to user terminals in the form of MSs within range of the BS 101, i.e. within a cell having the BS 101 at its centre. Two such MSs, namely MS 103 and MS 105, are shown having respectively radio links 107 and 109 to the BS 101. The system 100 also includes another BS 111 which provides wireless communication service to user terminals in the form of MSs within range of the BS 111, i.e. within a cell having the BS 111 at its centre. Two such MSs, namely MS 113 and MS 115, are shown having respectively radio links 117 and 119 to the BS 111. The system 100 also includes a BS 121 which provides wireless communication service to user terminals in the form of MSs (mobile stations) within range of the BS 121, i.e. within a cell having the BS 121 at its centre. Two such MSs, namely MS 123 and MS 125, are shown having respectively radio links 127 and 129 to the BS 121.

The BS 101 is operationally associated via a link 104 with a router 102, e.g. a core router, which routes communications from the BS 101 (on behalf of MSs served by the BS 101) to other terminals, e.g. MSs served by other BSs, within the system 100 and in other systems (not shown) operably connected to the system 100. The router 102 also routes incoming communications to the BS 101. The BS 111 is operationally associated via a link 114 with a router 112, e.g. a core router, which routes communications from the BS 111 (on behalf of MSs served by the BS 111) to other terminals, e.g. MSs served by other BSs, within the system 100 and in other systems operably connected to the system 100. The router 112 also routes incoming communications to the BS 111. The BS 121 is operationally associated via a link 124 with a router 122, e.g. a core router, which routes communications from the BS 121 (on behalf of MSs served by the BS 121) to other terminals, e.g. MSs served by other BSs, within the system 100 and in other systems operably connected to the system 100. The router 122 also routes incoming communications to the BS 121. The routers 102, 112 and 122 are operably connected via further links 132, 134 and 136 to a network 131 which may, for example, include a plurality of further routers and/or other nodes (not shown) which may include one or more telephony gateways and/or gateways to other communication systems. The routers 102, 112 and 122 are mutually connected to one another and to other routers (not shown) via the network 131. The links 104, 114, 124, 132, 134 and 136, and individual links (not shown) between nodes and/or routers (not shown) in the network 131, may comprise wired and/or wireless links. The routers 102, 112 and 122, together with any routers in the network 131, form a router network in the system 100. Although each of these routers is shown in FIG. 1 serving one associated BS, each router of the router network may serve each of a plurality of associated BSs, as will be apparent to those skilled in the art.

The system 100 may include a zone controller 133, which may be one of a plurality of zone controllers operating within the system 100. The zone controller 133 is a controller which comprises a processor which provides co-ordination and control of operation involving the different BSs, routers and other nodes of the system 100. For example, the zone controller 133 may control allocation of routing paths and communication channels employed for communication by BSs and their served MSs within the system 100 in a given zone of the system. The zone controller 133 has a link 135 to the router 102, a link 137 to the router 112 and a link 139 to the router 122. The links 135, 137 and 139 may be wired and/or wireless links. The links 135, 137 and 139 are shown as direct links but could optionally pass via the network 131. The zone controller 133 is also operably connected to a database 138 which holds details relating to composition of the system 100 including current identities and locations of MSs and membership of groups of MSs operating within the system 100. The database 138 may be a single database unit or may comprise a plurality of units, which may be located in the same part or different parts of the system 100.

The system 100 includes a control console 145 operably connected to the infrastructure of the system 100, in particular to the database 138, the zone controller 133 and the network 131 (and thereby to user terminals of the system 100). The control console 145 may be a fixed installation within the system 100. The control console 145 includes various operably interconnected components including a control terminal 141, via which communications with user terminals of the system 100 may be made, and a user interface 142. The user interface 142 may comprise a single interface unit or a plurality of interface units at which an operator may in a known manner apply input control signals and information, and monitor activities being controlled within the system 100. The control console 145 and its constituent components may thereby be operated via the user interface 142 by an operator who is a system manager or other person having authority to change operational conditions within the system 100 via inputs made at the user interface 142. The operator of the control console 145 may, for example, be able to establish groups of MSs within the system 100 as talk groups or may change the membership of such groups, e.g. by adding MSs as new members to each group or by removing MSs as group members. The details relating to the membership and capabilities of restrictions on the various groups added at the user interface 142 may be delivered to a group management processor 144 and may be recorded by the group management processor 144 in the database 138. The group management processor 144 may be incorporated within the control console 145 as shown in FIG. 1, although it could be located elsewhere in the system 100, either as a separate component or as part of another functional component of the system 100, e.g. part of the zone controller 133.

The operator of the control console 145 may also be able to patch existing groups together in a known manner by controlling a suitable group patching processor which carries out the patching operation, e.g. the group management processor 144, via the user interface 142. For example, if a call is established between a first group of MSs and it is required to join or connect a second group of MSs (and possibly other groups) into the same call, the action of 'patching', either joining or connecting, the groups including the first and second groups so that they may communicate together, may be carried out by insertion of suitable information at the user interface 142. The inserted information includes the identities of the groups to be patched together and a control signal indicating that a patching operation is required to be carried out. The group patching processor which is to carry out the patching, e.g. the group management processor 144, may retrieve data relating to the first and second groups from the database 138 and may issue signals, as necessary, to ensure that MSs of the patched groups participate together in the same call (traffic communication). The configuration used to determine the method of patching, e.g. by the group management processor 144, may be derived from the database 138 or provided by the control console 145.

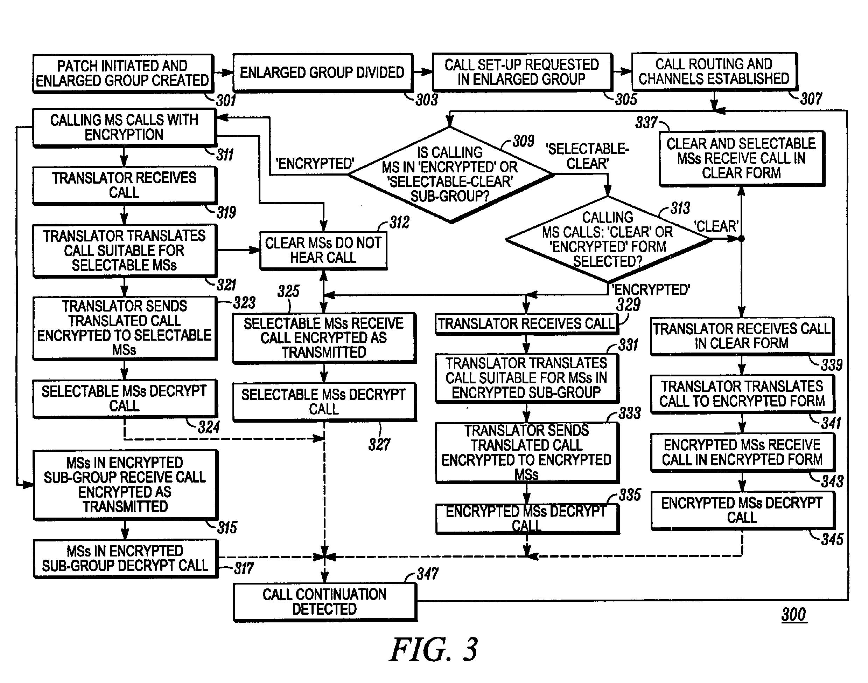

The system 100 also includes, for example operably connected to the group management processor 144, a translator 143. The translator 143 is a processor which may be incorporated within the control console 145, as shown in FIG. 1, or may alternatively be located elsewhere in the system 100, e.g. as a separate processor or as part of another functional processor, such as the zone controller 133. The translator 143 translates encrypted calls from one encrypted form to another as described later with reference to FIG. 3. The translator 143 also translates calls from an unencrypted form to an encrypted form using an encryption procedure. The translator 143 may also be used optionally to translate calls from an encrypted form to an unencrypted form using a decryption procedure, although such use may only be selected for use in circumstances when the security status of the call is unimportant. The translator 143 may translate calls taking place in an enlarged group formed by patching of smaller groups in which the smaller groups employ different encryption forms, e.g. in a manner described later with reference to FIG. 3.

In order to carry out the translation operation, the translator 143 uses the encryption parameters, including encryption keys, available to the user terminals in each of the smaller groups employing the different encryption forms. The translator 143 may carry out a translation procedure in only one call in one enlarged group. Alternatively, the translator 143 may carry out translation procedures in different calls which take place in different specified enlarged groups, either at the same time or at different times, and the encryption parameters, such as encryption keys, used for translation of the calls in each of the different enlarged groups may generally be different, although they could be the same in some cases. Thus, the translator 143 may hold or have access to (e.g. in an associated memory of the control console 145 or in the database 138) a plurality of sets of data, including encryption keys, each set relating to an encryption form used by a particular group, together with an identity of the group in which each of the keys and other data is to be used.

The translator 143 may be a single processor or may comprise a plurality of processors, which may be located in the same part or different parts of the system 100. The translator 143 may be part of a processor having at least one other function in addition to translation. For example, the functions of the translator 143 and of the group management processor 144 may be combined in a common processing unit. The translator 143 may comprise a single processor or different processors operable to carry out its different translation procedures, e.g. the different encryption and decryption procedures described later with reference to FIG. 3.

In a simpler form of the system 100, the system 100 may not include a zone controller. In that case, another processor of the system 100, such as a processor of the control console 145, may carry out functions, such as routing and channel allocation, attributed herein to the zone controller 133.

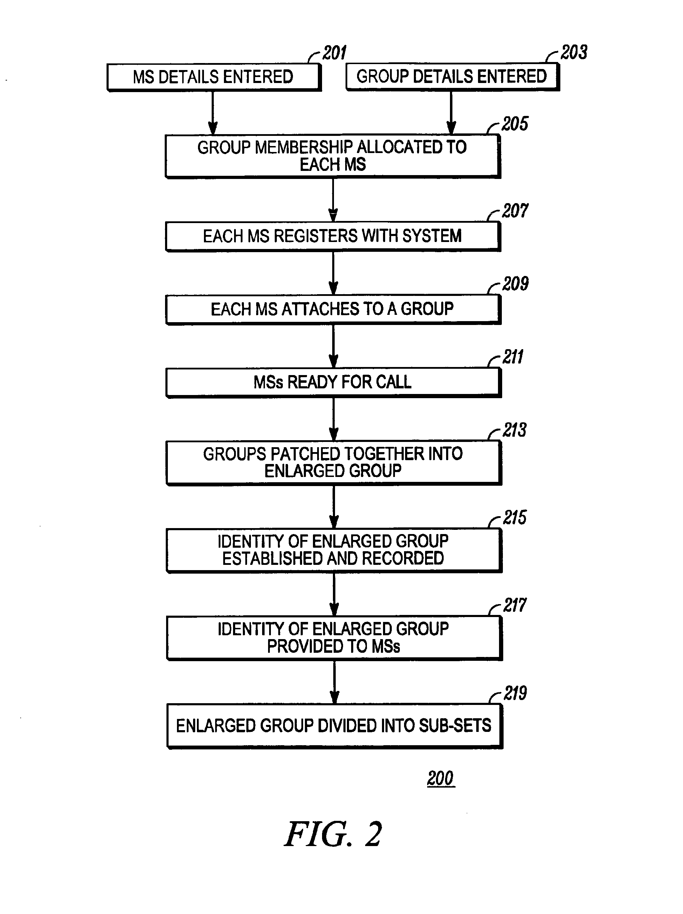

FIG. 2 is a flow chart of a method 200 of operation in the system 100, illustrating operation embodying the invention. In a step 201, details of each MS are recorded in the database 138. The details may be recorded at different times for different MSs. The details may be entered by an operator of the control console 145 at the user interface 142. The control terminal 141 may send a signal indicating the details to be recorded in the database 138 either directly to the database 138 or via an intermediate processor, such as the zone controller 133. The details to be recorded in step 201 may be in pre-defined data fields of the database 138. Illustrative examples of data fields in which data may be entered in step 201 are as follows:
(i) an identity of the MS, e.g. an Individual Subscriber Short Identity (ISSI) for an MS operable in a TETRA system;
(ii) an indication of an organisation (e.g. police), department and unit in which a user of the MS will operate;
(iii) an indication of a seniority or rank of the user;
(iv) an indication of any privileges provided to the user of the MS and of any restrictions on use of the MS by its user;
(v) a location of a communication cell or zone which will be considered as the home location of the MS; or
(vi) a security capability of the MS.

In a step 203, which may be carried out before, at the same time as, or after step 201, group details are entered, e.g. initially at the user interface 142, for a particular group which is to operate in the system 100. A new group may be established by this action or details of an existing group may be changed. The details of the group may be recorded in the database 138 by a signal sent from the control terminal 141. The details of the group recorded may include its security capability.

Each group established may have a security capability which is one of three possibilities, as follows:
(a) the group may be encrypted only, meaning that each MS of the group can transmit and receive communications which are only in end-to-end encrypted form while the MS is in that group;
(b) the group may be clear only, meaning that each MS of the group can transmit and receive communications which are only in clear (unencrypted) form while the MS is in that group; or
(c) the group may be selectable, meaning that each MS while in the group can transmit and/or receive communications which are clear or, if selected, each MS of the group can transmit and/or receive communications which are encrypted.

The security capability of each group may be configured (or re-configured) by an operator in step 203.

Each MS of a given group may have a security capability which is fixed or selectable depending on the construction of the MS. Where the security capability is selectable, its security capability may be determined at any particular time by either: (i) configuration of the MS (which may be selected manually by a user or automatically by receipt of a control signal from a control processor of the system 100) or (ii) by configuration of the security capability of the group(s) in which the MS is to participate; or (iii) by a combination of the two.

In a step 205, which may be carried out at the same time as step 201 or at a different time, at least one group membership of each MS is allocated. The membership may be recorded at different times for different MSs or for membership of different groups. The membership may be entered by an operator of the control console 145 at the user interface 142 and/or configured in the MS in a known way, e.g. by receipt of a control signal from the system 100, e.g. from the group management processor 144 via the control terminal 141. The control terminal 141 may send a signal indicating the membership details to be recorded in the database 138 either directly to the database 138 or via an intermediate processor, such as the zone controller 133. The operator of the control console 145 may, at the user interface 142, identify, by a group identity number, a group, or each of a plurality of groups, which each MS is to join as a member. Alternatively, or in addition, the operator may identify, by an MS identity, each MS that is to be a member of a given group.

The MSs which are members of each group are usually operated by users in the same organisation, although the MSs do not need to be in the same communication cell of the system 100. Thus, for example, the MSs 103, 113 and 123 shown in FIG. 1 could be members of a first group and the MSs 105, 115 and 125 shown in FIG. 1 could be members of a second group.

In a step 207, each MS registers with the system 100. When each MS is first operated in an active mode after a period of inactivity, the MS seeks to establish a wireless link with a selected one of the BSs of the system 100 in a known way. The MS normally identifies itself to the BS and the BS verifies the identity before proceeding to allow the MS to become attached to it for service. This procedure generally establishes for each MS a link to the nearest BS; so, for example, the link 107 between the MS 103 and the BS 101 is established in this way. The BS to which the MS becomes attached may notify the zone controller 133 of the link which has been established and the zone controller 133 may register the same information, e.g. in the database 138. In this way, the current cell of each MS actively operating in the system 100 is recorded in the database 138.

In a step 209, which may take place during or after registration in step 207, each MS attaches to a group. This means that the MS actively joins or is connected to the group, causing a notification signal to the system 100, e.g. by the MS. The relevant group is one which has already been configured in step 203 and membership of which is recorded in a memory of the MS as well as in the database 138. Where the MS is a member of several groups, the group to which the MS currently attaches may be selected by a user of the MS, e.g. at a control interface (not shown) of the MS, or may be selected automatically by receipt of a control signal from the system 100. Details of the current attachment are recorded in the database 138.

Following each MS successfully registering in step 207 and successfully attaching to a group in step 209, the MS is ready for participating in a group call. This is represented by a step 211 in the method 200. In this specification, the expression 'call' relates generally to a communication between a first user terminal, e.g. a first MS, and one or more other user terminals, e.g. MSs, of traffic information. The traffic information may be user speech although it could alternatively, or in addition, be user communicated data, such as alphanumeric or other characters, picture information or a video stream.

In a step 213, two or more already established groups which are smaller groups are patched together into an enlarged group. The patching operation may be carried out by a procedure which is initiated by an operator of the control console 145 at the user interface 142 identifying the groups to be patched and entering an indication that the groups identified are to be patched. Step 213 may, for example, be applied when the operator of the control console 145 becomes aware that the enlarged group needs to be formed for operational reasons, e.g. where an emergency situation has occurred and emergency service personnel of different units or different organisations need to participate in a single group call. Where more than two smaller groups are to be patched together, step 213 may be carried out in a series of patching stages. When the relevant information about the required patching has been entered at the user interface 142, one or more signals, including the entered information, may be delivered to a suitable processor, e.g. the group management processor 144, to effect the patching operation in a known way, e.g. using pre-recorded operational algorithms and data retrieved from the database 138. The group management processor 144 (or another processor, such as the zone controller 133) may proceed to issue an instruction, details of which may be entered into the database 138, indicating that the identified smaller groups are to be treated in the system 100 as patched as a single enlarged group. The single enlarged group may be given a single group identity which is different from the identities of the individual smaller groups making up the enlarged group. Details of the enlarged group, the smaller groups that were patched to form it, and the MSs that are members of it, may thus be recorded in the database 138. Establishment and recording of the enlarged group are indicated in the method 200 by the step 215.

In a step 217, the identity of the enlarged group is provided to, e.g. by the group management processor 144 or by the zone controller 133, and recorded by MSs that are members of the patched groups. These MSs may receive a signal, which may include an identity of the enlarged group, e.g. from the group management processor 144 or by the zone controller 133, instructing each of the MSs to attach to the enlarged group.

The single enlarged group established in steps 213 and 215 may be a so-called 'supergroup.' in which many groups existing over a wide area are patched together. In this case, standard signalling may be employed to indicate to MSs an identity of the supergroup. In particular, where the system 100 is a TETRA system, Dynamic Group Number Assignment (DGNA) signalling may be employed in step 217 in which each MS on one or more of the patch groups is notified, e.g. by the zone controller 133, of the identity of the supergroup.

In a step 219, the set comprising the enlarged group formed in step 213 is divided, e.g. by the group management processor 144, into different sub-sets having different security capabilities. It is important to note that the division is applied to ensure, where required, that an encrypted call made in the enlarged group is not sent in clear form to any clear or selectable MS. The step is further used in the method 300 to be described with reference to FIG. 3. The division carried out in step 219 may be an automatic procedure, using data obtained from the database 138, especially data relating to MS and/or group identities and MS and/or group security capabilities.

In an alternative form of the method 200, a step may be carried out after step 213 and before step 215 in order to determine if there can be one enlarged group or if sub-set groups are needed, and if so, how many. Step 219 may then follow where it is determined that one enlarged group can be formed. Step 215 may then follow step 219 to allow an identity of the enlarged group or of each sub-set group that is part of the enlarged group (one or more) to be established and recorded. Step 217 may then follow step 219 to provide to the MSs the appropriate identity of the enlarged group or of the sub-set group.

The sub-sets formed by the division in step 219 are not necessarily the same as the groups that were patched to form the enlarged group. Each sub-set formed by the division may itself be an enlarged group, even a supergroup. In other words, the members of each sub-set may be MSs drawn from one or more of the original groups patched together in step 213. Conveniently, each of the sub-sets formed in step 219 comprises an integral number of the original smaller groups that were patched in step 213.

The different sub-sets formed in step 219 have different security capabilities. The sub-sets may comprise only two sub-sets as follows: (i) an encrypted or secure sub-set; and (ii) a selectable-clear sub-set. The encrypted sub-set is a sub-set consisting of all of the MSs of the enlarged group which can transmit and receive calls only in encrypted form. The selectable-clear sub-set is all of the other MSs of the enlarged group. The MSs of the selectable-clear sub-set includes: (i) MSs in one or more groups that can transmit and receive calls only in clear (unencrypted) form; and (ii) MSs in one or more groups which can be selected to transmit and/or receive calls in either encrypted form or in clear form. The sub-set which each MS of the enlarged group joins or is connected to may be recorded in data in the database 138. Details of the allocation of the smaller groups to the enlarged group and the sub-sets of the enlarged group produced by step 219 may be recorded in data appertaining to the groups in the database 138.

Following the method 200, the enlarged group is ready to establish a group call with routing of the call to include, where appropriate, routing via the translator 143 to translate the call between one encrypted form and another encrypted form or from unencrypted form to one or more encrypted forms.

FIG. 3 is a flow chart 300 illustrating how a call may take place in an enlarged group which is formed by patching of smaller groups in accordance with embodiments of the present invention. In the following description of the method 300, it is assumed that the enlarged group comprises mainly MSs; user terminals of the enlarged group are thus referred to as 'MSs'. However, it should be noted that the enlarged group and each sub-set of the enlarged group may also include one or more fixed terminals, such as control terminals, one or more traffic signal recorders and one or more control terminals, such as the control terminal 141.

The method 300 begins in a step 301, in which a group patch is initiated and an enlarged group is created. Step 301 may be carried out as in the method 200 described earlier.

In a step 303, the enlarged group is divided into sub-sets in the manner of step 219 described earlier.

Next, in a step 305, a call set-up is requested in the enlarged group. This step may be carried out in a known manner. Typically, one of the MSs of the enlarged group, a 'calling' MS, sends a call set-up request signal to its serving BS. For the purposes of illustration, the MS 103 may be the calling MS. The signal may be delivered onward by the serving BS to the zone controller 133. The call set up request signal indicates the group identity of the group which is to participate in the call. This may normally be the identity of one of the smaller groups which has been patched together to form the enlarged group although it could alternatively be the identity of the enlarged group which may have been notified to the calling MS and other MSs of the enlarged group or even the identity of a sub-set produced by step 303.

In each of these cases, the zone controller 133 may identify the enlarged group from the group identity provided. The zone controller 133 may refer to data held in the database 138 to identify the other participants of the identified enlarged group which are to participate in the call.

Alternatively, the control console 145 (which may have created the patch) may make these identifications, and may send any needed call requests to the zone controller 133 to make sure all members of the enlarged group are set-up to receive the call of the originating MS.

In a step 307 which follows step 305, routing and one or more allocated channels for the requested call are established, e.g. by the zone controller 133, in a known manner. The routing may be a multicast tree route which includes various routers of the system 100 selected depending on the location of the cells of the respective groups and/or members of the groups which are to participate in the call and possibly also with reference to current loading of resources within the system 100. The routing is established also to include the translator 143, e.g. to operate as in steps 319 to 323, steps 329 to 333, or steps 339 and 341 to be described later. The communication channels, e.g. specified time slots of a specified carrier frequency in a TETRA system, may also be allocated for the call by the zone controller 133.

The method 300 proceeds with a step 309 in which the sub-set (sub-group) of the calling MS is determined, e.g. by the group management processor 144. In other words, the calling MS is identified to be either: (i) an 'encrypted' MS which is in the encrypted sub-set; or (ii) a 'selectable' or 'clear' MS which is in the 'selectable-clear' sub-set. If the calling MS is identified as being in the 'encrypted' sub-set, the method proceeds in a step 311. If the calling MS is identified as being in the 'selectable-clear' sub-set, the method proceeds in a step 313.

The calling MS in the encrypted sub-set thus proceeds in step 311 to make the call, i.e. to transmit traffic information, in encrypted form. The calling MS, may use a known procedure, e.g. as described in the Background section earlier, to encrypt the traffic information sent in step 311. The calling MS may use an encryption key previously and separately supplied in a known way to the calling MS and other encrypted MSs of the enlarged group. The encryption key used may be a single key to be used only in participation in the enlarged group call by the encrypted MS members of the enlarged group. The calling MS may include within the information it transmits synchronisation information to allow the encrypted MSs that receive the call to decrypt the call. In a step 315 which follows step 311, the encrypted MSs of the enlarged group, i.e. the MSs that are in the same encrypted sub-set (sub-group), receive the call in the same encrypted form in which it was transmitted. For illustration purposes, the MSs 113 and 115 may be members of the encrypted sub-set and may receive the call in step 315. In a step 317 which follows step 315, the encrypted MSs that receive the call in encrypted form in step 315 decrypt the call. The encrypted MSs use a reverse of the encryption procedure (employed by the calling MS in step 311) involving the previously and separately supplied encryption key. The encrypted MSs provide a clear output of the received traffic information to their users.

Following step 311, the translator 143 receives the call in encrypted form in a step 319. The translator 143 may relay the call in the same encrypted form in which it was received, if that is suitable for any selectable-clear groups that are to receive it. Alternatively, or in addition, in a step 321, the translator 143 translates the call suitable for receipt by the selectable-clear sub-set in the case where the sub-set uses for encryption and decryption a different encryption parameter from that used by the originating encrypted sub-set, particularly the encrypted MS making the call. The different encryption parameter may be one or more of: (i) a different encryption key; (ii) a different encryption and decryption algorithm; and (iii) a different synchronisation parameter. Step 321 may thus be carried out by the translator 143 decrypting the encrypted call received in step 319 which was encrypted using a first encryption form and re-encrypting it using a second encryption form different from the first form, the first and second encryption forms using at least one encryption parameter which is different. This translation procedure requires the translator 143 to have previously received, e.g. in a known manner, prior to step 321 and recorded, e.g. in a memory (not shown) of the control console 145, the different parameters applicable. For example, where the different parameters are different encryption keys, the translator 143 will have previously received and recorded the relevant keys, which are respectively: (i) the same encryption key as provided to the encrypted MS making the call in the first encrypted form so that the translator 143 may decrypt the call it receives in the first encrypted form; and (ii) the same encryption key as provided to the selectable-clear MSs that are to receive the call in the second encrypted form, so that the translator 143 may suitably re-encrypt the call suitable for receipt and decryption by those MSs.

In a step 323, the translator 143 sends the translated call in the second encrypted form to the selectable-clear MSs. For illustration purposes, the MSs 105, 115 and 125 may be considered to be receiving MSs in a selectable-clear sub-set that receives the call in step 323. In a step 324 which follows step 323, the selectable MSs that receive the call in the second encrypted form as sent by the translator 143 in step 323 decrypt the call. The selectable MSs use a reverse of the encryption procedure (employed by the translator 143 in step 323) involving the same previously and separately supplied encryption key used by the translator 143. The selectable MSs provide a clear output of the received traffic information to their users.

A step 312 which follows step 311 and step 321 represents the clear MSs, which are MSs in the selectable-clear sub-set which are clear only MSs, receiving the encrypted call sent in step 311. The clear MSs do not have the capability to decrypt the encrypted call, so do not hear the call sent in step 311 or translated in step 321. Thus, the call sent in step 311 is received by MSs of the enlarged group only in an encrypted form. None of the MSs receives the call in clear form.

Step 313 is the next step after step 309 in the case in which one of the MSs of the selectable-clear sub-set is the calling MS. The call may be made in either: (i) an encrypted form by one of the selectable MSs; or (ii) a clear form either by one of the clear MSs or by one of the selectable MSs. For illustration purposes, the MS 105 may be considered to be the calling MS in step 313.

In a step 325 which follows step 313, the MSs in the selectable-clear sub-set of the originating MS of the enlarged group receive the call in the same encrypted form in which it was transmitted. In a step 327 which follows step 325, the selectable MSs that receive the call in same encrypted form in step 325 are able to decrypt the call. In order to be able to carry out the decryption operation, the selectable MSs may have been selected by their users to operate in an encrypted mode or may have been put automatically into that mode by receipt of a control signal from the system 100, e.g. from the group management processor 144 via the control terminal 141, e.g. following determination in steps 309 and 313 of the security mode of the calling MS. In carrying out the decryption operation, the selectable MSs use a reverse of the encryption procedure (employed by the calling MS in step 313) involving a previously and separately supplied encryption key. The selectable MSs provide a clear output of the received traffic information to their users.

Following step 313, the translator 143 receives the call in encrypted form in a step 329. The translator 143 may relay the call in the same encrypted form as that in which it was received. Alternatively, or in addition, in a step 331, the translator 143 translates the call suitable for receipt by the encrypted sub-set (sub-group) MSs in the case where the encrypted sub-set MSs use a different encryption form, e.g. an encryption key or other encryption parameter different from that used by the originating selectable-clear sub-set MS. Step 331 may thus be carried out by the translator 143 decrypting the encrypted call received in step 329 and re-encrypting it using another encryption parameter. This requires the translator 143 to receive, e.g. in a known manner, and record prior to step 331 the appropriate different encryption parameters, e.g. different encryption keys. These parameters may be the same as those used by the translator 143 to carry out the reverse translation in step 321. The parameters required in step 331 are thus respectively: (i) the same encryption parameters as used by the selectable MS making the call in one encrypted form, e.g. the second encrypted form referred to in relation to steps 321, so that the translator 143 may decrypt the call it receives in that encrypted form; and (ii) the same encryption parameters as used by the encrypted sub-set MSs that are to receive the call, so that the translator 143 may suitably re-encrypt the call in another encrypted form suitable for those MSs, e.g. the first encrypted form referred to in relation to step 321.

In a step 333, the translator 143 sends the translated call in the second encrypted form to the encrypted sub-set MSs. In a step 335 which follows step 333, the encrypted MSs that receive the call in the second encrypted form as sent by the translator 143 in step 333 decrypt the call. The encrypted MSs use a reverse of the encryption procedure (employed by the translator 143 in step 333) involving previously supplied and recorded encryption parameters. The encrypted MSs provide a clear output of the received traffic information to their users.

Step 312 already referred to above also follows step 313 (and step 333) and represents the clear MSs receiving the encrypted call sent in step 313 (and step 333). The clear MSs do not have the capability to decrypt the encrypted call, so do not hear the call sent in step 313 (or step 333). Thus, the call made in step 313 is received by MSs of the enlarged group only in an encrypted form. None of the MSs of the enlarged group receives the call in clear form.

Where the call made in step 313 is in a clear (unencrypted) form, steps 337 and 339 follow. Selectable-clear sub-set MSs are able to receive the call in clear form in step 337. The translator 143 also receives the call in clear form in a step 339. In a step 341 which follows step 339, the translator 143 translates the call from clear form to an encrypted form. In a step 343, the encrypted MSs, i.e. the MSs that are members of the encrypted sub-set, receive the call in encrypted form from the translator 143. In a step 345, the encrypted MSs decrypt the call received in step 343 in the same manner as in step 317. These MSs provide a clear output of the received traffic information to their users.

The call which takes place in the method 300 may be continued in a known manner by an MS of the enlarged group other than the MS that was the original calling MS. Such a continuation is typically requested by one of the MSs sending promptly a continuation request signal to the zone controller 133. Detection of such a call continuation request made promptly to the zone controller 133 is indicated as a step 347. Step 347 results in the routing and channels allocated in step 307 remaining available for continuation of the call. The call continuation takes place by returning the method to step 309; step 309 and the appropriate steps following it are repeated. In this case, the 'calling' MS identified in step 309 is the MS that requested continuation of the call. That MS continues the call, i.e. sends further traffic information, in step 311 or step 313, as appropriate.

In a further embodiment of the invention, the control console 145 may be employed to make transmissions of traffic information within the enlarged patched group. Traffic information for transmission may be entered at the user interface 142 and transmitted by the control terminal 141. The transmissions may be made in encrypted or unencrypted form. Desirably, one of these forms is selected for all of the transmissions to be made by the control console 145. The control console 145 may thus be a member of the encrypted sub-set or of the selectable-clear sub-set, as appropriate, for this purpose. Where the transmission is to be made in encrypted form, the translator 143 may be employed to carry out encryption of the information to be transmitted.

In a further embodiment which is a modification of the method 300, more than two sub-sets may be created, although each sub-set would still be classified as either 'encrypted' or 'selectable-clear'. Thus, there may be more than one encrypted sub-set and/or more than one selectable-clear sub-set. The behaviour of the MSs of each sub-set would therefore be as described above with reference to FIG. 3. Where the system 100 is a TETRA system, communications about the group assignments may be made by DGNA signalling. The translator 143 may carry out all of the translation operations for the various sub-sets. Alternatively, translations required for different sub-sets of the same type, e.g. different encrypted sub-sets, may be carried out by different translators.

In the embodiments of the invention which have been described, at least two of the original groups may be connected together without the formation of a new enlarged group, e.g. a new supergroup, between them. This is known in the art as a 'non-regroupable' patch. Such a connection may be made either with or without one or more enlarged groups being formed between other groups as well. In this case, depending on whether the connected groups are 'secure', 'selectable' or 'clear', calls to or from the members of the groups would be made as described above with reference to FIG. 3.

In a further embodiment of the invention, in the encrypted sub-set or in the selectable-clear sub-set referred to above there may be member groups that use different encryption forms, e.g. use at least one encryption parameter that is different in one group of the sub-set from that used in at least one other group of the sub-set. In this case, where a call is initiated in encrypted form by an MS in one of the groups, the translator 143 may be employed to translate the call into another encrypted form suitable for use by MSs in one of the other groups of the same sub-set. The translator 143 may, if required, carry out multiple translations for multiple recipient groups. In all cases, however, it may be arranged that clear MSs would not hear an encrypted call. Clear calls can, if required, be translated and encrypted (as in steps 339 and 341) before sending to another group or sub-set.

In a further embodiment of the invention, where, in the method 300, it is detected that in addition to the calling MS there are MSs and/or groups in only one of the sub-set types, i.e. only the selectable-clear sub-set(s) or only the encrypted sub-set(s), then any step shown in FIG. 3 requiring translation for the other sub-set is not used. Where it is detected that, apart from the calling MS, there are only clear MSs and/or clear groups in rest of the enlarged group, the call set-up may be cancelled.

In the foregoing specification, specific embodiments have been described. However, one of ordinary skill in the art will appreciate that various modifications and changes can be made without departing from the scope of the invention as set forth in the accompanying claims. Accordingly, the specification and drawings are to be regarded in an illustrative rather than a restrictive sense, and all such modifications are intended to be included within the scope of present teachings. The benefits, advantages, solutions to problems, and any element(s) that may cause any benefit, advantage, or solution to occur or become more pronounced are not to be construed as critical, required, or essential features or elements of any or all the claims. The invention is defined solely by the appended claims including any amendments made during the pendency of this patent application and all equivalents of those claims as issued.

Moreover in this document, relational terms such as 'first' and 'second', 'top' and 'bottom', and the like, may be used solely to distinguish one entity or action from another entity or action without necessarily requiring or implying any actual such relationship or order between such entities or actions. The terms 'comprises', 'comprising', 'has', 'having', 'includes', 'including', 'contains', 'containing' or any other variation thereof, are intended to cover a non-exclusive inclusion, such that a process, method, article, or apparatus that comprises, has, includes or contains a list of elements does not include only those elements but may include other elements not expressly listed or inherent to such process, method, article, or apparatus. An element preceded by 'comprises ...a', 'has ...a', includes ...a', or 'contains ...a' does not, without more constraints, preclude the existence of additional identical elements in the process, method, article, or apparatus that comprises, has, includes, contains the element. The terms 'a' and 'an' are defined as one or more unless explicitly stated otherwise herein. The terms 'substantially', 'essentially', 'approximately', 'about' or any other version thereof, are defined as being close to as understood by one of ordinary skill in the art, and in one non-limiting embodiment the term is defined to be within 10%, in another embodiment within 5%, in another embodiment within 1% and in another embodiment within 0.5%, of a stated value. The term 'coupled' as used herein is defined as connected, although not necessarily directly and not necessarily mechanically. A device or structure that is 'configured' in a certain way is configured in at least that way, but may also be configured in ways that are not listed.

It will be appreciated that some embodiments may include one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and apparatus for synchronization in a digital mobile communication system as described herein. The non-processor circuits may include, but are not limited to, a radio receiver, a radio transmitter, signal drivers, clock circuits, power source circuits, and user input devices. As such, these functions may be interpreted as steps of a method to perform the synchronization in a digital mobile communication system as described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used. Both the state machine and ASIC are considered herein as a 'processing device' for purposes of the foregoing discussion and claim language.

Moreover, an embodiment including a memory can be implemented as a computer-readable storage element having computer readable code stored thereon for programming a computer (e.g., comprising a processing device) to perform a method as described and claimed herein. Examples of such computer-readable storage elements include, but are not limited to, a hard disk, a CD-ROM, an optical storage device, a magnetic storage device, a Read Only Memory (ROM), a Programmable Read Only Memory (PROM), an Erasable Programmable Read Only Memory (EPROM), an Electrically Erasable Programmable Read Only Memory (EEPROM) and a Flash memory.

Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter may lie in less than all features of a single disclosed embodiment. Thus the following claims are hereby incorporated into the Detailed Description, with each claim standing on its own as a separately claimed subject matter.

## Claims

1. A mobile communication system (100) comprising:
a group management processor (144) operable to divide an enlarged group of user terminals (103, 113, 123; 105, 115, 125), formed by patching of smaller groups, into sub-sets of user terminals comprising:
(1) an encrypted sub-set of terminals which are operable to undertake only encrypted communications; and
(2) a selectable-clear sub-set of terminals which comprises:
(i) selectable terminals that are able to undertake clear communications and, when selected, encrypted communications; and
(ii) clear terminals that are operable to undertake only clear communications; and
a translator (143) operable to translate a communication sent in a first encrypted form from a user terminal of one of the sub-sets of terminals into a second encrypted form suitable for decryption by user terminals of the other sub-set of terminals.

2. A mobile communication system (100) according to claim 1 wherein:
the translator (143) is further operable to translate a communication sent in a clear form from a user terminal of the selectable-clear sub-set of terminals into an encrypted form suitable for decryption by user terminals of the encrypted sub-set of terminals.

3. A mobile communication system (100) according to claim 1 or claim 2 wherein:
one of the sub-sets of terminals comprises a first group of user terminals operable to communicate in a first encrypted form; and
the other of the sub-sets of terminals comprises a second group of user terminals operable to communicate in a second encrypted form and a third group of user terminals operable to communicate in a third encrypted form;
wherein the translator (144) is operable to translate a communication sent in the first encrypted form from a user terminal of the first group into multiple encrypted forms suitable for decryption by the user terminals of the second group and the user terminals of the third group of user terminals.

4. A mobile communication system (100) according to any one of the preceding claims, wherein:
the translator (144) is further operable to translate a communication sent in an encrypted form by a user terminal of one of the sub-sets of terminals into a clear form suitable for receipt by the clear user terminals of the selectable-clear sub-set of terminals.

5. A mobile communication system (100) according to any one of the preceding claims wherein:
the translator (144) is operable to translate an encrypted communication received in the first encrypted form into the second encrypted form, by decrypting the communication of the first encrypted form and re-encrypting the decrypted communication in the second encrypted form.

6. A mobile communication system (100) according to any one of the preceding claims wherein:
the first encrypted form and the second encrypted form use at least one encryption parameter which differs between the first encrypted form and
the second encrypted form, wherein the at least one encryption parameter is selected from:
(i) an encryption key;
(ii) an encryption algorithm;
(iii) a synchronisation parameter.

7. A mobile communication system (100) according to any one of the preceding claims wherein:
the group management processor is operable to patch together communication resources of at least a first group of user terminals and a second group of user terminals to form the enlarged group of the terminals.

8. A mobile communication system (100) according to any one of the preceding claims which is a cellular communication system and includes:
(i) mobile stations which are user terminals of the encrypted sub-set of terminals; and mobile stations which are user terminals of the selectable-clear sub-set of terminals;
(ii) an infrastructure including a plurality of base stations (101, 111, 121) each operable to serve mobile stations of the sub-sets of terminals with wireless communications; and
(iii) a control console (145) operably connected to the infrastructure, the control console including a user interface operable to obtain operator instructions relating to operation of the group management processor.

9. A mobile communication system (100) according to claim 8 wherein:
the control console (145) incorporates the translator (143) and the group management processor (144).

10. A mobile communication system (100) according to any one of the preceding claims including, operably connected to the group management processor, a database operable to store, for each of the user terminals or smaller groups of user terminals included in the enlarged group:
a security capability defining whether the user terminals or the smaller group are capable of being assigned to one of the sub-sets of terminals of the enlarged group; and
a group identity of the enlarged group together with an identity of each of the smaller groups or user terminals, or both, making up the enlarged group.

11. A mobile communication system (100) according to any one of the preceding claims, wherein:
the group management processor (144) is operable to select whether communications between user terminals of the enlarged group are passed through the translator (143).

12. A mobile communication system (100) according to any one of the preceding claims which is a TETRA system.

13. A method of operation (300) in a mobile communication system (100) comprising:
dividing (303) an enlarged group of user terminals (103, 113, 123; 105, 115, 125), formed (301) by patching of smaller groups, into sub-sets of user terminals comprising:
(1) an encrypted sub-set of terminals, which are operable to undertake only encrypted communications; and
(2) a selectable-clear sub-set of terminals, which comprises:
(i) selectable terminals that are able to undertake clear communications and, when selected, encrypted communications; and
(ii) clear terminals that are operable to undertake only clear communications;
sending an encrypted communication in a first encrypted form from a user terminal of a first one of the sub-sets of terminals;
receiving (319; 329) the communication by a translator (143); and
translating (321; 331) the communication from the first encrypted form to a second encrypted form suitable for decryption by user terminals of the other sub-set of terminals.

14. A method according to claim 13 wherein:
when a communication is sent in an encrypted form from a user terminal of one of the sub-sets of terminals, the communication is received by user terminals of the enlarged group in only an encrypted form.

15. A processor or console (145) which includes the group management processor (144) and the translator (143) of the system claimed in any one of claims 1 to 12.

## Patentansprüche

1. Mobiles Kommunikationssystem (100) umfassend:
einen Gruppenmanagementprozessor (144), der zum Teilen einer erweiterten Gruppe aus Benutzerendgeräten (103, 113, 123; 105, 115, 125), die durch Zusammenfügen kleinerer Gruppen gebildet wurde, in Untermengen aus Benutzerendgeräten, umfassend:
(1) eine Verschlüsselt-Untermenge aus Endgeräten, die nur dazu geeignet sind, verschlüsselte Kommunikation durchzuführen; und
(2) eine Auswählbar-Unverschlüsselt-Untermenge aus Endgeräten umfassend:
(i) Auswählbar-Endgeräte, die imstande sind, unverschlüsselte Kommunikation durchzuführen und, wenn ausgewählt, verschlüsselte Kommunikation; und
(ii) Unverschlüsselt-Endgeräte, die nur dazu geeignet sind, unverschlüsselte Kommunikation durchzuführen;
geeignet ist; und
einen Übersetzer (143), der geeignet ist, eine in einer ersten verschlüsselten Form von einem Benutzerendgerät einer der Untermengen aus Endgeräten gesendete Kommunikation in eine zweite verschlüsselte Form zu übersetzen, die zur Entschlüsselung durch Benutzerendgeräte der anderen Untermenge aus Endgeräten geeignet ist.

2. Mobiles Kommunikationssystem (100) gemäß Anspruch 1, wobei:
der Übersetzer (143) weiterhin geeignet ist, eine in unverschlüsselter Form von einem Benutzerendgerät der Auswählbar-Unverschlüsselt-Untermenge aus Endgeräten gesendete Kommunikation in eine verschlüsselte Form zu übersetzen, die zur Entschlüsselung durch Benutzerendgeräte der Verschlüsselt-Untermenge aus Endgeräten geeignet ist.

3. Mobiles Kommunikationssystem (100) gemäß Anspruch 1 oder Anspruch 2, wobei:
eine der Untermengen aus Endgeräten eine erste Gruppe aus Endgeräten umfasst, die geeignet ist, in einer ersten verschlüsselten Form zu kommunizieren; und
die Andere der Untermengen aus Endgeräten eine zweite Gruppe aus Benutzerendgeräten, die geeignet ist, in einer zweiten verschlüsselten Form zu kommunizieren, und eine dritte Gruppe aus Benutzerendgeräten, die geeignet ist, in einer dritten verschlüsselten Form zu kommunizieren umfasst;
wobei der Übersetzer (143) geeignet ist, eine in der ersten verschlüsselten Form von einem Endgerät der ersten Gruppe gesendete Kommunikation in einer Vielzahl verschlüsselter Formen zu übersetzen, die zur Entschlüsselung durch die Endgeräte der zweiten Gruppe aus Benutzerendgeräten und der Endgeräte der dritten Gruppe aus Benutzerendgeräten geeignet ist.

4. Mobiles Kommunikationssystem (100) gemäß einem der vorhergehenden Ansprüche, wobei:
der Übersetzer (143) weiter geeignet ist, eine in einer verschlüsselten Form durch ein Endgerät einer der Untermengen aus Endgeräten gesendete Kommunikation in eine unverschlüsselte Form zu übersetzen, die zum Empfang durch die Unverschlüsselt-Benutzerendgeräte der Auswählbar-Unverschlüsselt-Untermenge aus Endgeräten geeignet ist.

5. Mobiles Kommunikationssystem (100) gemäß einem der vorhergehenden Ansprüche, wobei:
der Übersetzer (143) geeignet ist, durch das Entschlüsseln einer Kommunikation aus der ersten verschlüsselten Form und das Wiederverschlüsseln der entschlüsselten Kommunikation in die zweite verschlüsselte Form, die verschlüsselte Kommunikation,
die in der ersten verschlüsselten Form empfangen wurde, in die zweite verschlüsselte Form zu übersetzen.

6. Mobiles Kommunikationssystem (100) gemäß einem der vorhergehenden Ansprüche, wobei:
die erste verschlüsselte Form und die zweite verschlüsselte Form wenigstens einen Verschlüsselungsparameter verwenden, der zwischen der ersten verschlüsselten Form und der zweiten verschlüsselten Form abweicht, wobei der wenigstens eine Verschlüsselungsparameter ausgewählt ist aus:
(i) einem Verschlüsselungsschlüssel;
(ii) einem Verschlüsselungsalgorithmus;
(iii) einem Synchronisationsparameter.

7. Mobiles Kommunikationssystem (100) gemäß einem der vorhergehenden Ansprüche, wobei:
der Gruppenmanagementprozessor geeignet ist, Kommunikationsressourcen von wenigstens einer ersten Gruppe aus Benutzerendgeräten und einer zweiten Gruppe aus Benutzerendgeräten zusammenzufügen, um eine erweiterte Gruppe aus Endgeräten zu bilden.

8. Mobiles Kommunikationssystem (100) gemäß einem der vorhergehenden Ansprüche, wobei das mobile Kommunikationssystem (100) ein zellulares Kommunikationssystem ist und weiterhin umfasst:
(i) mobile Stationen, die Benutzerendgeräte aus der Verschlüsselt-Untermenge aus Endgeräten sind; und mobile Stationen, die Benutzerendgeräte aus der Auswählbar-Unverschlüsselt-Untermenge aus Endgeräten sind;
(ii) eine Infrastruktur mit einer Vielzahl von Basisstationen (101, 111, 121), wobei jede der Basisstationen geeignet ist, mobile Stationen der Untermengen aus Endgeräten mit drahtloser Kommunikation zu versorgen; und
(iii) ein Steuergerät (145), die funktionsfähig mit der Infrastruktur verbunden ist, wobei die Steuerkonsole eine Benutzerschnittstelle einschließt, die geeignet ist, Bedieneranweisungen betreffend den Betrieb des Gruppenmanagementprozessors zu erlangen.

9. Mobiles Kommunikationssystem (100) gemäß Anspruch 8, wobei:
das Steuergerät (145) den Übersetzer (143) und den Gruppenmanagementprozessor (144) umfasst.

10. Mobiles Kommunikationssystem (100) gemäß einem der vorhergehenden Ansprüche, wobei das mobile Kommunikationssystem eine funktionsfähig mit dem Gruppenmanagementprozessor verbundene Datenbank umfasst, die geeignet ist, für jedes der Benutzerendgeräte oder kleinerer Gruppen aus Benutzerendgeräten, die von der erweiterten Gruppe umfasst sind, zum Speichern:
einer Sicherheitsfähigkeit, die definiert, ob die Benutzerendgeräte oder die kleinere Gruppe fähig sind, einer der Untermengen aus Endgeräten der erweiterten Gruppe zugeteilt zu werden; und
einer Gruppenidentität der erweiterten Gruppe zusammen mit einer Identität von jeder der kleineren Gruppen und/oder der Benutzerendgeräte, die die erweiterte Gruppe ausmachen.

11. Mobiles Kommunikationssystem (100) gemäß einem der vorhergehenden Ansprüche, wobei:
der Gruppenmanagementprozessor (144) geeignet ist auszuwählen, ob Kommunikation zwischen den Beutzerendgeräten der erweiterten Gruppe den Übersetzer (143) durchläuft.

12. Mobiles Kommunikationssystem (100) gemäß einem der vorhergehenden Ansprüche, wobei das mobile Kommunikationssystem ein TETRA-System ist.

13. Betriebsverfahren (300) in einem mobilen Kommunikationssystem (100) umfassend:
Teilen (303) einer erweiterten Gruppe von Benutzerendgeräten (103, 113, 123; 105, 115, 125), die durch Zusammenfassen kleinerer Gruppen gebildet wurde, in Untermengen aus Endgeräten umfassend:
(1) eine Verschlüsselt-Untermenge aus Endgeräten, die nur dazu geeignet sind, verschlüsselte Kommunikation durchzuführen; und
(2) eine Auswählbar-Unverschlüsselt-Untermenge aus Endgeräten umfassend:
(i) Auswählbar-Endgeräte, die imstande sind, unverschlüsselte Kommunikation durchzuführen und, wenn ausgewählt, verschlüsselte Kommunikation; und
(ii) Unverschlüsselt-Endgeräte, die nur dazu geeignet sind, unverschlüsselte Kommunikation durchzuführen;
und
Senden einer verschlüsselten Kommunikation in einer ersten verschlüsselten Form von einem Benutzerendgerät einer ersten Untermenge aus Endgeräten;
Empfangen (319; 329) der Kommunikation durch einen Übersetzer (143); und
Übersetzen (321; 331) der Kommunikation aus der ersten verschlüsselten Form in eine zweite verschlüsselte Form, die zur Entschlüsselung durch Benutzerendgeräte der anderen Untermenge aus Endgeräten geeignet ist.

14. Verfahren gemäß Anspruch 13, wobei:
die Kommunikation durch Benutzerendgeräte aus der erweiterten Gruppe nur in verschlüsselter Form empfangen wird, wenn die Kommunikation in einer verschlüsselten Form von einem Benutzerendgerät einer der Untermengen aus Endgeräten gesendet wird.

15. Prozessor oder Gerät (145), der/das den Gruppenmanagementprozessor (144) und den Übersetzer (143) des Systems gemäß einem der Ansprüche 1 bis 12 umfasst.

## Revendications

1. Système de communication mobile (100) comprenant :
un processeur de gestion de groupe (144) exploitable pour diviser un groupe agrandi de terminaux d'utilisateurs (103, 113, 123 ; 105, 115, 125), formé par le brassage de groupes plus petits, en sous-ensembles de terminaux d'utilisateurs comprenant :
(1) un sous-ensemble de terminaux chiffré qui est exploitable pour n'entreprendre que des communications chiffrées ; et
(2) un sous-ensemble de terminaux sélectionnable-en clair qui comprend :
(i) des terminaux sélectionnables qui sont en mesure d'entreprendre des communications en clair et, lorsque sélectionné, des communications chiffrées ; et
(ii) des terminaux en clair qui sont exploitables pour n'entreprendre que des communications en clair ; et
un traducteur (143) exploitable pour traduire une communication envoyée sous une première forme chiffrée depuis un terminal d'utilisateur d'un des sous-ensembles de terminaux en une deuxième forme chiffrée appropriée pour le déchiffrement par des terminaux d'utilisateurs de l'autre sous-ensemble de terminaux.

2. Système de communication mobile (100) selon la revendication 1, dans lequel :
le traducteur (143) est en outre exploitable pour traduire une communication envoyée sous une forme en clair depuis un terminal d'utilisateur du sous-ensemble de terminaux sélectionnable-en clair en une forme chiffrée appropriée pour le déchiffrement par des terminaux d'utilisateurs du sous-ensemble de terminaux chiffré.

3. Système de communication mobile (100) selon la revendication 1 ou la revendication 2, dans lequel :
un des sous-ensembles de terminaux comprend un premier groupe de terminaux d'utilisateurs exploitable pour communiquer sous une première forme chiffrée ; et
l'autre des sous-ensembles de terminaux comprend un deuxième groupe de terminaux d'utilisateurs exploitable pour communiquer sous une deuxième forme chiffrée et un troisième groupe de terminaux d'utilisateurs exploitable pour communiquer sous une troisième forme chiffrée ;
dans lequel le traducteur (144) est exploitable pour traduire une communication envoyée sous la première forme chiffrée depuis un terminal d'utilisateur du premier groupe en de multiples formes chiffrées appropriées pour le déchiffrement par les terminaux d'utilisateurs du deuxième groupe et les terminaux d'utilisateurs du troisième groupe de terminaux d'utilisateurs.

4. Système de communication mobile (100) selon l'une quelconque des revendications précédentes, dans lequel :
le traducteur (144) est en outre exploitable pour traduire une communication envoyée sous une forme chiffrée par un terminal d'utilisateur d'un des sous-ensembles de terminaux en une forme en clair appropriée pour la réception par les terminaux d'utilisateurs en clair du sous-ensemble de terminaux sélectionnable-en clair.

5. Système de communication mobile (100) selon l'une quelconque des revendications précédentes, dans lequel :
le traducteur (144) est exploitable pour traduire une communication chiffrée reçue sous la première forme chiffrée en la deuxième forme chiffrée, en déchiffrant la communication de la première forme chiffrée et en rechiffrant la communication déchiffrée sous la deuxième forme chiffrée.

6. Système de communication mobile (100) selon l'une quelconque des revendications précédentes, dans lequel :
la première forme chiffrée et la deuxième forme chiffrée utilisent au moins un paramètre de chiffrement qui diffère entre la première forme chiffrée et la deuxième forme chiffrée, où le au moins un paramètre de chiffrement est sélectionné parmi :
(i) une clé de chiffrement ;
(ii) un algorithme de chiffrement ;
(iii) un paramètre de synchronisation.

7. Système de communication mobile (100) selon l'une quelconque des revendications précédentes, dans lequel :
le processeur de gestion de groupe est exploitable pour brasser ensemble des ressources de communication d'au moins un premier groupe de terminaux d'utilisateurs et un deuxième groupe de terminaux d'utilisateurs afin de former le groupe agrandi des terminaux.

8. Système de communication mobile (100) selon l'une quelconque des revendications précédentes qui est un système de communication cellulaire et inclut :
(i) des stations mobiles qui sont des terminaux d'utilisateurs du sous-ensemble de terminaux chiffré ; et des stations mobiles qui sont des terminaux d'utilisateurs du sous-ensemble de terminaux sélectionnable-en clair ;
(ii) une infrastructure incluant une pluralité de stations de base (101, 111, 121) chacune exploitable pour desservir des stations mobiles des sous-ensembles de terminaux avec des communications sans fil ; et
(iii) une console de commande (145) connectée opérationnellement à l'infrastructure, la console de commande incluant une interface utilisateur exploitable pour obtenir des instructions d'opérateur relatives à l'opération du processeur de gestion de groupe.

9. Système de communication mobile (100) selon la revendication 8, dans lequel :
la console de commande (145) incorpore le traducteur (143) et le processeur de gestion de groupe (144).

10. Système de communication mobile (100) selon l'une quelconque des revendications précédentes incluant, connectée opérationnellement au processeur de gestion de groupe, une base de données exploitable pour stocker, pour chacun des terminaux d'utilisateurs ou des groupes plus petits de terminaux d'utilisateurs inclus dans le groupe agrandi :
une capacité de sécurité définissant si les terminaux d'utilisateurs ou le groupe plus petit sont capables d'être assignés à un des sous-ensembles de terminaux du groupe agrandi ; et
une identité de groupe du groupe agrandi conjointement avec une identité de chacun des groupes plus petits ou des terminaux d'utilisateurs, ou les deux, constituant le groupe agrandi.

11. Système de communication mobile (100) selon l'une quelconque des revendications précédentes, dans lequel :
le processeur de gestion de groupe (144) est exploitable pour sélectionner si des communications entre des terminaux d'utilisateurs du groupe agrandi sont passées par l'intermédiaire du traducteur (143).

12. Système de communication mobile (100) selon l'une quelconque des revendications précédentes qui est un système TETRA.

13. Procédé d'opération (300) dans un système de communication mobile (100) comprenant :
la division (303) d'un groupe agrandi de terminaux d'utilisateurs (103, 113, 123 ; 105, 115, 125), formé (301) par le brassage de groupes plus petits, en sous-ensembles de terminaux d'utilisateurs comprenant :
(1) un sous-ensemble de terminaux chiffré, qui est exploitable pour n'entreprendre que des communications chiffrées ; et
(2) un sous-ensemble de terminaux sélectionnable-en clair, qui comprend :
(i) des terminaux sélectionnables qui sont en mesure d'entreprendre des communications en clair et, lorsque sélectionné, des communications chiffrées ; et
(ii) des terminaux en clair qui sont exploitables pour n'entreprendre que des communications en clair ;
l'envoi d'une communication chiffrée sous une première forme chiffrée depuis un terminal d'utilisateur d'un premier des sous-ensembles de terminaux ;
la réception (319 ; 329) de la communication par un traducteur (143) ; et
la traduction (321 ; 331) de la communication de la première forme chiffrée en une deuxième forme chiffrée appropriée pour le déchiffrement par des terminaux d'utilisateurs de l'autre sous-ensemble de terminaux.

14. Procédé selon la revendication 13, dans lequel :
lorsqu'une communication est envoyée sous une forme chiffrée depuis un terminal d'utilisateur d'un des sous-ensembles de terminaux, la communication est reçue par des terminaux d'utilisateurs du groupe agrandi uniquement sous une forme chiffrée.

15. Processeur ou console (145) qui inclut le processeur de gestion de groupe (144) et le traducteur (143) du système revendiqué dans l'une quelconque des revendications 1 à 12.
